# EUROPEAN PATENT APPLICATION

(11) **EP 4 044 527 A1**
(43) Date of publication of application: **17.08.2022**
(21) Application number: 20884015.7
(22) Date of filing: 03.11.2020
(51) Int. Cl.: H04L 12/723

(54) **MULTI-SERVICE FORWARDING METHOD, SWITCH, ELECTRONIC EQUIPMENT AND READABLE MEDIUM**

(30) Priority: 07.11.2019 CN 201911081160
(71) Applicant: ZTE Corporation, Shenzhen, Guangdong 518057 (CN)
(72) Inventor: LIN, Ning, Shenzhen, Guangdong 518057 (CN)
(74) Representative: Canzler & Bergmeier Patentanwälte Partnerschaft mbB
(86) International application number: PCT/CN2020/126160
(87) International publication number: WO 2021/088802

(57) **Abstract**

A multi-service forwarding method, a switch, an electronic equipment and a readable medium. The multi-service forwarding method is used to implement the forwarding of different types of messages, and the method comprises using a message translation table to translate an access message format into a forwarding message format corresponding to a forwarding port.

## Description

### CROSS-REFERENCE TO RELATED APPLICATION

This application is filed on the basis of the Chinese patent application No. 201911081160. 2 filed November 7th, 2019, and claims priority of the Chinese patent application, the entire contents of which are incorporated herein by reference.

### TECHNICAL FIELD

The embodiments of the present disclosure relate to the technical field of network communication, in particular to a multi-service forwarding method, a switch, an electronic apparatus and a readable medium.

### BACKGROUND

QinQ (802.1Q in 802.1Q, two-layer VLAN encapsulation) encapsulates a user message with a carrier VLAN Tag (virtual local area network) before the message arrives at a carrier network, so that the message carries two-layer VLAN Tags and traverse the carrier network. The carrier VLAN Tag of the carrier network is removed as the user message leaves the carrier network, so that only the private VLAN tag is kept in the user network. QinQ effectively extends the number of VLANs, thus alleviating the limitation of insufficient number of VLANs.

Switches can provide more ports for communication networks, which is an important device to extend the communication networks. Only one VLAN Tag can be replaced or removed when the existing switch performs service forwarding. However, when forwarding QinQ messages, due to the differences of chip functions of different manufacturers, the double-tagged VLAN Tags will be directly replaced with the VLAN Tag of the destination port, or only the outer VLAN Tag will be replaced. Therefore, it's inefficient for the existing switches to forward QinQ messages, which limits the flexibility of the communication networks.

### SUMMARY

To this end, in order to at least solve one of the related technical problems, including the problem of insufficient flexibility of the communication network caused by the inefficiencies of the current switch to forward QinQ messages, some embodiments of the present disclosure provide a multi-service forwarding method, a switch, an electronic apparatus and a readable medium.

In view of this, according to an aspect of the present disclosure, there is provided a multi-service forwarding method, for forwarding different types of messages, the method includes, translating, by means of a message translation table, a format of a received message into a format of a message to be forwarded corresponding to a forwarding port.

According to another aspect of the present disclosure, there is provided a switch, which includes a port and a message translation module, where the message translation module is communicatively connected with the port, and the message translation module is configured to translate, by means of a message translation table, a format of a received message into a format of a message to be forwarded corresponding to a forwarding port.

According to yet another aspect of the present disclosure, there is provided an electronic apparatus including at least one processor, and a storage device storing at least one program thereon, which when executed by the processor, causes the processor to carry out the methods as set forth in the present disclosure.

According to yet another aspect of the present disclosure, there is provided a computer-readable medium storing a computer program thereon, which when executed by a processor, causes the processor to carry out the methods as set forth in the present disclosure.

### BRIEF DESCRIPTION OF DRAWINGS

The accompanying drawings are intended to provide a further understanding of the present disclosure in conjunction with the embodiments described below and constitute a part of the description, but they are not limiting the present disclosure.
FIG. 1 depicts a flow chart of a multi-service forwarding method according to an embodiment of the present disclosure;
FIG. 2 depicts a flow chart of a multi-service forwarding method according to an embodiment of the present disclosure;
FIG. 3 depicts a flow chart of a multi-service forwarding method according to an embodiment of the present disclosure;
FIG. 4 depicts an illustrative block diagram of a switch according to an embodiment of the present disclosure; and
FIG. 5 depicts a schematic diagram of an electronic apparatus according to an embodiment of the present disclosure.

### Reference numbers in the drawings:

401: Incoming Translation Module
402: Outgoing Translation Module
403: QinQ port
404: Port for single-tagged VLAN message.

### DETAILED DESCRIPTION

Some embodiments of the present disclosure will be described with details below with reference to the accompanying drawings. It should be understood that the embodiments described herein are merely intended to illustrate and explain the present disclosure, but are not intended to limit the present disclosure.

The multi-service forwarding method according to some embodiments generally focuses on insufficient flexibility of the communication network resulting from the problem that the existing Layer 3 switch only supports the forwarding of single-tagged virtual local area network messages, but not QinQ messages.

In order to enable a Layer 3 switch to forward QinQ messages and improve the flexibility of the communication network, this embodiment provides a multi-service forwarding method for a switch, to enable forwarding of different types of messages.

In an embodiment, in the multi-service forwarding method, the format of the received message is translated into the forwarding message format corresponding to a forwarding port by means of a message translation table. When a multi-tagged message is received by the switch and is to be forwarded via a forwarding port for single-tagged VLAN messages, the multi-tagged message is translated into a single-tagged VLAN message by means of the message translation table, and is then forwarded. When a single-tagged VLAN message is received by the switch and is to be forwarded via a forwarding port for multi-tagged messages, the single-tagged VLAN message is translated into a multi-tagged message by means of the message translation table, and is then forwarded.

For example, as the QinQ message is received by the QinQ port of the switch, and is to be forwarded from the Layer 3 port, the QinQ message is translated into a single-tagged VLAN message suitable for the Layer 3 port by means of the message translation table, and is then forwarded via the Layer 3 port.

In some embodiments, the message translation table includes an incoming translation table configured to translate a double-tagged message into a single-tagged VLAN message, and an outgoing translation table configured to translate a single-tagged VLAN message into a double-tagged message. In other words, the uplink message and the downlink message are translated by the incoming translation table and the outgoing translation table respectively. When an uplink QinQ message is received by the switch, the QinQ message is translated into a single-tagged VLAN message by means of the incoming translation table. When a downlink single-tagged VLAN message is received by the switch, the single-tagged VLAN message is translated into a QinQ message by means of the outgoing translation table.

In some embodiments, the incoming translation table translates a double-tagged message into a single-tagged VLAN message by replacing or removing. For example, a message with an outer tag VLAN 1001 and an inner tag VLAN 101 is directly replaced for a single-tagged message with VLAN 101. In case that the incoming translation table translates the message by removing, the inner tag or outer tag of the double-tagged message may be removed. For example, the outer tag VLAN 1001 of the message with outer tag VLAN 1001 and inner tag VLAN 101 is removed to form a single-tagged message of VLAN 101. Alternatively, the inner tag of the message with outer tag VLAN 1001 and inner tag VLAN 101 is removed to form a single-tagged message of VLAN 1001.

In some embodiments, the outgoing translation table translates the single-tagged VLAN message into a double-tagged message by embedding an inner tag or adding an outer tag. For example, a message with an inner tag VLAN 101 is embedded inside the single-tagged message with VLAN 1001 through the outgoing translation table to form a message with an outer tag VLAN 1001 and an inner tag VLAN 101.

In some embodiments, the multi-service forwarding method further includes configuring the message translation table according to the message receiving port and forwarding port before forwarding the message. That is, the chip of the switch is configured. In case that the switch forwards the received QinQ message according to the Multi-Protocol Label Switching (MPLS) forwarding process, the incoming translation table and the outgoing translation table should be configured according to the QinQ port and MPLS port respectively. For example, the incoming translation table is configured to translate a message with an outer VLAN ID (identify) and an inner VLAN ID into a single-tagged VLAN message, and the outgoing translation table is configured to match a single-tagged VLAN message into a message with an outer VLAN ID and an inner VLAN ID. In case that the switch forwards the received QinQ message according to the Virtual Extensible LAN (VXLAN for short) forwarding process, the incoming translation table and the outgoing translation table should be configured respectively according to the QinQ port and VTEP port. For example, the incoming translation table is configured to translate a message with an outer VLAN ID and an inner VLAN ID into a single-tagged message, and the outgoing translation table is configured to translate match a single-tagged message into a message with an outer VLAN ID and an inner VLAN ID.

In some embodiments, a message forwarding port is created before the configuration of the message translation table according to the message receiving port and the message forwarding port. The switch creates a forwarding port according to the destination address of the message. For example, a Layer 3 port, an MPLS port, or a VSTEP port is created as needed.

According to the multi-service forwarding method as set forth in some embodiments of the present disclosure, the format of a received message is translated into the format of a message to be forwarded corresponding to the forwarding port by means of a message translation table, thus realizing the forwarding of multilayer messages by the switch, extending the service range of the switch and increasing the flexibility of the networks.

It should be noted that the multi-service forwarding method according to this embodiment may be performed by a switch or other network elements to improve the flexibility of the network.

The multi-service forwarding method will be illustrated in detail below by way of an example with a double-tagged QinQ message, for a better understanding of the embodiments of the present disclosure.

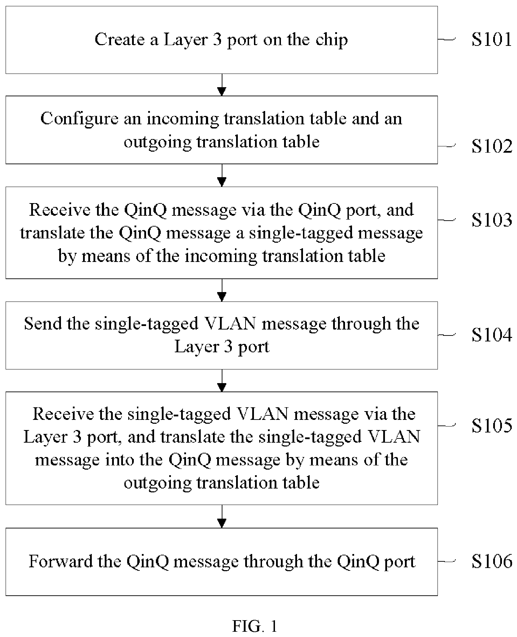

FIG. 1 depicts a flow chart of a multi-service forwarding method according to an embodiment of the present disclosure. As shown in FIG. 1, the translation of the QinQ message into a single-tagged VLAN message and the forwarding of the message according to the multi-service forwarding method includes the following.

At S101, a Layer 3 port is created on the chip.

The Layer 3 port is created on the chip of the switch to receive or forward single-tagged VLAN messages.

At S102, an incoming translation table and an outgoing translation table are configured.

The incoming translation table and the outgoing translation table are configured on the chip. The incoming translation table is configured to translate QinQ messages into single-tagged VLAN messages. The outgoing translation table is configured to match single-tagged VLAN messages to QinQ messages. The QinQ message includes two tagged VLAN IDs, i.e., an inner tagged VLAN ID and an outer tagged VLAN ID. The ID can be any value from 1 to 4096.

At S103, the QinQ message is received via the QinQ port, and the QinQ message is translated into a single-tagged message by means of the incoming translation table.

A QinQ message is received via the QinQ port, such as a QinQ message with an outer tag VLAN 1001 and an inner tag VLAN 101.

The QinQ message is translated (or matched) into a single-tagged VLAN message by means of the incoming translation table, so that a QinQ service can be mapped to a Layer 3 service, so that the QinQ message can enter the access process of the Layer 3 service and any subsequent Layer 3 service process.

For example, for a QinQ message with an outer tag VLAN 1001 and an inner VLAN tag 101, the incoming translation table may translate the message with the outer tag VLAN 1001 and the inner tag VLAN 101 into a single-tagged message with VLAN 101.

At S104, the single-tagged VLAN message is sent through the Layer 3 port.

The translated single-tagged VLAN message enters the service access process through the Layer 3 port and is forwarded routinely according to the Layer 3 service process.

When the single-tagged VLAN message received by the Layer 3 port is to be forwarded through the QinQ port by the switch, the multi-service forwarding method further includes the following.

At S105, the single-tagged VLAN message is received via the Layer 3 port, and the single-tagged VLAN message is translated into the QinQ message by means of the outgoing translation table.

The single-tagged VLAN message is received via the Layer 3 port by the switch receives, such as the single-tagged VLAN 1001 message received via the layer 3 port.

An inner VLAN ID may be added to the single-tagged VLAN message by means of the outgoing translation table, the single-tagged VLAN message is thus translated into a message of an outer VLAN 1001 and an inner VLAN 101.

At S106, the QinQ message is forwarded through the QinQ port.

The QinQ message translated by means of the outgoing translation table is forwarded through the QinQ port according to the QinQ service process.

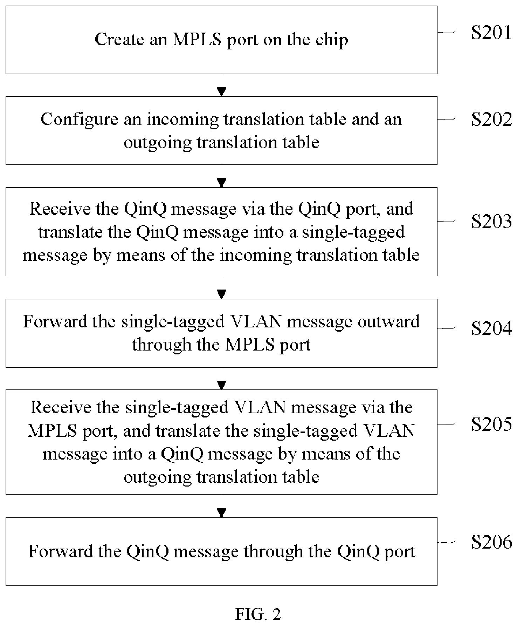

FIG. 2 depicts a flow chart of a multi-service forwarding method according to an embodiment of the present disclosure. As shown in FIG. 2, in the multi-service forwarding method, a QinQ message is to be translated into a single-tagged VLAN message and forwarded according to the Multi-Protocol Label Switching (MPLS) process, which includes the following.

At S201, an MPLS port is created on the chip.

The MPLS port is created on the chip of the switch to receive or forward single-tagged VLAN messages.

At S202, an incoming translation table and an outgoing translation table are configured.

The incoming translation table and the outgoing translation table are configured on the chip. The incoming translation table is configured to translate QinQ messages into single-tagged VLAN messages. The outgoing translation table is configured to match single-tagged VLAN messages into QinQ messages. The QinQ message includes two VLAN IDs, i.e., an inner VLAN ID and an outer VLAN ID. Where the ID can be any value from 1 to 4096.

At S203, the QinQ message is received via the QinQ port, and the QinQ message is translated into a single-tagged message by means of the incoming translation table.

A QinQ message is received via the QinQ port, such as a QinQ message of an outer VLAN 1001 and an inner VLAN 101. Then, the QinQ message is translated (or matched) into a single-tagged VLAN message by means of the incoming translation table, such that the QinQ service is mapped to the MPLS service, and the QinQ message can enter the access process of the MPLS service and the subsequent MPLS service process.

For example, for a QinQ message with an outer tag VLAN 1001 and an inner tag VLAN 101, the incoming translation table can translate the message with the outer tag VLAN 1001 and the inner tag VLAN 101 into a single-tagged message with VLAN 101.

At S204, the single-tagged VLAN message is forwarded outward through the MPLS port.

The translated single-tagged VLAN message enters the service access process through MPLS port and is forwarded in a routine manner according to the Layer 3 service process.

During the forwarding of the single-tagged VLAN message received by the MPLS port, by the the switch through the QinQ port, the multi-service forwarding method further includes the following.

At S205, the single-tagged VLAN message is received via the MPLS port, and is then translated into a QinQ message by means of the outgoing translation table.

The switch receives the single-tagged VLAN message through the MPLS port, such as the single-tagged VLAN 1001 message received by the MPLS port, and terminates the single-tagged VLAN message. An inner VLAN ID may be added to the single-tagged VLAN message by means of the outgoing translation table, the single-tagged VLAN message is thus translated into a message of an outer VLAN 1001 and an inner VLAN 101.

At S206, the QinQ message is forwarded through the QinQ port.

The QinQ message translated by means of the outgoing translation table is forwarded through the QinQ port according to the QinQ service process.

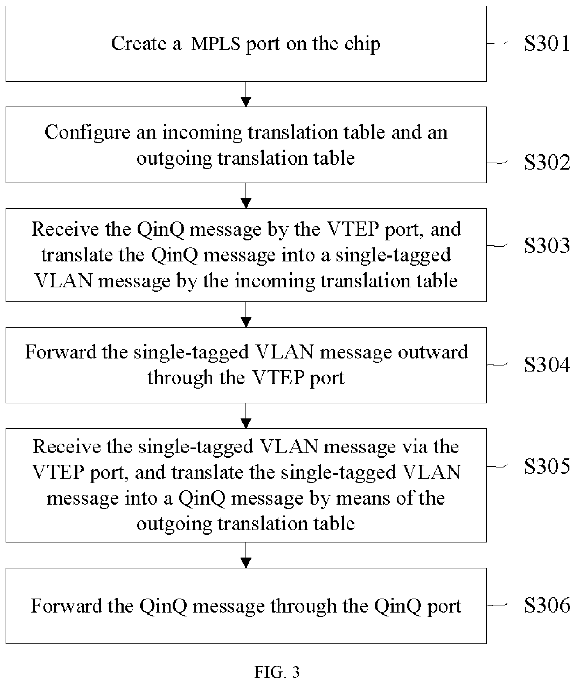

FIG. 3 depicts a flow chart of a multi-service forwarding method according to an embodiment of the present disclosure. As shown in FIG. 3, the translation of a QinQ message into a single-tagged VLAN message and the forwarding of the message according to the VXLAN (Virtual Extensible LAN) process includes the following.

At S301, a VTEP port is created on the chip.

The VTEP port is created on the chip of the switch to receive or forward single-tagged VLAN messages.

At S302, an incoming translation table and an outgoing translation table are configured.

The incoming translation table and the outgoing translation table are configured on the chip. The incoming translation table is configured to translate QinQ messages into single-tagged VLAN messages. The outgoing translation table is configured to match single-tagged VLAN messages to QinQ messages. The QinQ message includes two VLAN ID tags, i.e., the inner VLAN ID tag and the outer VLAN ID tag. The ID can be any value from 1 to 4096.

At S303, the QinQ message is received by the VTEP port, and the QinQ message is translated into a single-tagged VLAN message by the incoming translation table.

A QinQ message is received via the QinQ port, such as a QinQ message of an outer VLAN 1001 and an inner VLAN 101. QinQ messages are translated (or matched) into single-tagged VLAN messages by means of the incoming translation table, thus mapping QinQ services to VXLAN services, and enabling QinQ messages to enter the access process of VXLAN services and subsequent VXLAN service processes.

For example, for a QinQ message with an outer tag VLAN 1001 and an inner VLAN tag 101, the incoming translation table may translate the message with the outer tag VLAN 1001 and the inner tag VLAN 101 into a single-tagged message with VLAN 101.

At S304, the single-tagged VLAN message is forwarded outward through the VTEP port.

The translated single-tagged VLAN message enters the service access process through the VTEP port and is forwarded in a routine manner according to the VXLAN service process.

During the forwarding of the single-tagged VLAN message received by the VTEP port, by the switch through the QinQ port, the multi-service forwarding method further includes the following.

At S305, the single-tagged VLAN message is received via the VTEP port, and is then translated into a QinQ message by means of the outgoing translation table.

The single-tagged VLAN message is received via the VTEP port by the switch, such as a single-tagged message with VLAN 1001 received via the VTEP port. An inner VLAN ID may be added to the single-tagged VLAN message by means of the outgoing translation table, the single-tagged VLAN message is thus translated into a message of an outer VLAN 1001 and an inner VLAN 101.

At S306, the QinQ message is forwarded through the QinQ port.

The QinQ message translated by means of the outgoing translation table is forwarded through the QinQ port according to the QinQ service process.

lt should be noted that the above division of the steps of various methods is only for the purpose of clear description and the steps may be combined into one step or some steps may be split during implementation, which are all within the scope of the present disclosure as long as they include the same logical relationship. Algorithm and process with insignificant modifications added or insignificant designs introduced without changing the core design of the algorithm and process are within the scope of the present disclosure.

According to the multi-service forwarding method as described in the above embodiment, the format of the received message is translated into the format of a message to be forwarded corresponding to the forwarding port by means of the message translation table, thus realizing the forwarding of multilayer messages by the switch, extending the service range of the switch and increasing the flexibility of the networks.

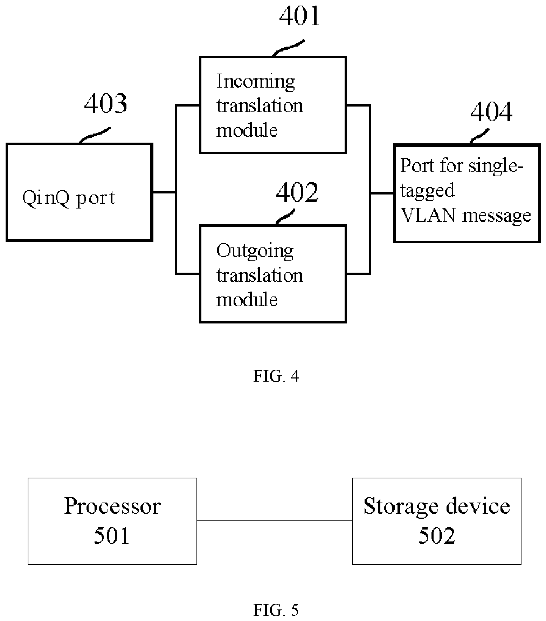

FIG. 4 depicts an illustrative block diagram of a switch according to an embodiment of the present disclosure. The switch can forward QinQ messages, thus improving the flexibility of communication networks.

As shown in FIG. 4, the switch includes an incoming translation module 401 and an outgoing translation module 402.

The incoming translation module 401 is configured to translate a QinQ message into a single-tagged VLAN message by means of an incoming translation table. The incoming translation table is stored in the incoming translation module 401, which is configured to translate QinQ messages into single-tagged VLAN messages.

In some embodiments, the incoming translation module 401 configured to translate QinQ messages into single-tagged VLAN messages, can be deployed in network elements such as switches, for forwarding of uplink data.

The outgoing translation module 402 is configured to translate single-tagged VLAN messages into QinQ messages by means of an outgoing translation table. The outgoing translation table is stored in the outgoing translation module 402, which may be configured to translate single-tagged VLAN messages into QinQ messages. In some embodiments, the outgoing translation table may be configured to translate the terminated single-tagged VLAN messages into QinQ messages.

In some embodiments, the outgoing translation module 402 converting a single-tagged VLAN message into a QinQ message, can be deployed in network elements such as switches, for forwarding downlink data.

In some embodiments, the switch further includes a QinQ port 403 and a port for single-tagged VLAN message 404.

The QinQ port 403 is configured to receive and/or send QinQ messages.

The QinQ port may be connected with one of the incoming translation module 401 and the outgoing translation module 402 merely, or may be connected with both the incoming translation module 401 and the outgoing translation module 402. In case that the switch sends uplink data only, the QinQ port 403 is communicatively connected with the incoming translation module 401 merely, and the QinQ port 403 is configured to receive QinQ messages. In case that the switch sends downlink data only, the QinQ port 403 is communicatively connected with the outgoing translation module 402 merely, and the QinQ port 403 is configured to transmit QinQ messages. In case that the switch sends both uplink and downstream data, the QinQ port 403 is communicatively connected with both the incoming translation module 401 and the outgoing translation module 402, and the QinQ port 403 is configured to receive and send QinQ messages.

The port for single-tagged VLAN message 404 is configured to receive and/or send single-tagged VLAN messages.

The port for single-tagged VLAN message 404 may be connected with one of the incoming translation module 401 and the egress translation module 402, or may be connected with both the incoming translation module 401 and the outgoing translation module 402. In case that the switch sends uplink data only, the port for single-tagged VLAN message 404 is communicatively connected with the incoming translation module 401 merely, and the port for single-tagged VLAN message 404 is configured to send single-tagged VLAN messages. In case that the switch sends downlink data only, the port for single-tagged VLAN message 404 is communicatively connected with the outgoing translation module 402 merely, and the port for single-tagged VLAN message 404 is configured to receive single-tagged VLAN messages. In case that the switch forwards both uplink and downlink data, the port for single-tagged VLAN message 404 is connected with both the incoming translation module 401 and the outgoing translation module 402, and the port for single-tagged VLAN message 404 is configured to send and receive single-tagged VLAN messages.

In some embodiments, the switch further includes a first configuration module, a second configuration module, a third configuration module, and a fourth configuration module.

The first configuration module is configured to configure the QinQ port by means of multi-tagged VLAN identifications. The first configuration module may configure the QinQ port as a port for a message with a double-tagged VLAN ID, or as a port for a message with multi-tagged VLAN ID.

The second configuration module is configured to configure the port for a message with single-tagged VLAN by means of the single-tagged VLAN identifier. The port for a message with single-tagged VLAN may be, without limitation, a Layer 3 port, an MPLS port, or a VXLAN port. A chip or network processor of a network element such as a switch is configured to create a port for a message with a single-tagged VLAN by means of the outer VLAN 1001.

The third configuration module is configured to configure the incoming translation table to translate QinQ messages into single-tagged VLAN messages. The third configuration module may configure the incoming translation table to translate a double-tagged VLAN ID message into a single-tagged VLAN ID message, such as translating a message with an outer VLAN 1001 and an inner VLAN 101 into a single-tagged message with VLAN 101.

The fourth configuration module is configured to configure the outgoing translation table to translate the terminated single-tagged VLAN message into a QinQ message. The fourth configuration module configures the outgoing translation table that is configured to translate a single-tagged VLAN ID message into a double-tagged VLAN ID message. In some embodiments, an inner VLAN ID may be added to a message with
an outer VLAN ID by means of the outgoing translation table, such as translating a message with an outer VLAN 1001 into a message with an outer VLAN 1001 and an inner VLAN 101.

In the switch of the embodiment described above, the incoming translation module 401 and the outgoing translation module 402 are two independent modules. In some embodiments, the incoming translation module 401 and the outgoing translation module 42 may be a single translation module, that is, the functions of the incoming translation module 401 and the outgoing translation module 402 are integrated into one translation module, which can also enable translation of QinQ messages into single-tagged VLAN messages and translation of single-tagged VLAN messages into QinQ messages.

It should be noted that all the modules involved in this embodiment are logic modules. In practical application, a logic unit can be a physical unit, a part of a physical unit or a combination of multiple physical units. In addition, in order to highlight the innovative part of the present disclosure, units that are not closely related to solution of the technical problems as set forth in the present disclosure are not introduced in this embodiment, but this does not mean that no further unit is included in this embodiment.

The switch according to this embodiment translates the format of the received message into the format of a message to be forwarded corresponding to the forwarding port, by means of the message translation table, thus realizing the forwarding of multi-tagged messages by the switch, extending the service range of the switch and increasing the flexibility of the networks.

Referring to FIG. 5, there is further provided an electronic apparatus in this embodiment, which includes at least one processor 501 and a storage device 502 storing at least one program thereon, which when executed by the processor 501, causes the processor 501 carry out the QinQ service access as described in this embodiment. To avoid repeated description, the details of the operations of the multi-service forwarding method will not be repeated here.

There is further provided a computer-readable medium in this embodiment on which a computer program is stored, which when executed by a processor, causes the processor to carry out the QinQ service access as described in this embodiment. To avoid repeated description, the details of the operations of the multi-service forwarding method will not be repeated here.

According to the multi-service forwarding method, electronic apparatus and readable medium as set forth in some embodiments of the present disclosure, the format of the received message is translated into the format of a message to be forwarded corresponding to the forwarding port by means of the message translation table, thus realizing the forwarding of multilayer messages by the switch, extending the service range of the switch and increasing the flexibility of the networks. In addition, the forwarding can be performed with no excessive occupation to chip resources, and all routine switch service modules can be reused, such that the forwarding of double-tagged messages is almost invisible. And network elements such as the switches can perform the forwarding of QinQ messages, thereby increasing the flexibility of the networks.

It shall be appreciated by a person having ordinary skills in the art that all or some of the steps, functional modules/units in the methods, systems and devices disclosed above can be implemented as software, firmware, hardware and their appropriate combinations. In the hardware implementation, the division between functional modules/units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage media includes volatile and nonvolatile, removable and non-removable media implemented in any method or technology for storing information such as computer-readable instructions, data structures, program modules or other data. Computer storage media include but are not limited to RAM, ROM, EEPROM, flash memory or other memory technologies, CD-ROM, digital versatile disks (DVD) or other optical disk storage, magnetic boxes, tapes, magnetic disk storage or other magnetic storage devices, or any other media that can be used to store desired information and can be accessed by computers. Furthermore, it is well known to a person having ordinary skills in the art that communication media usually contain computer-readable instructions, data structures, program modules or other data in modulated data signals such as carrier waves or other transmission mechanisms, and can include any information delivering media.

It should be noted that in this document, the term "including", "including" or any other variant thereof is intended to cover non-exclusive inclusion, so that a process, method, article or device that includes a series of elements includes not only those elements, but also other elements not explicitly listed, or elements inherent to such process, method, article or device. The element defined by the sentence "including a ......" does not exclude that other identical elements in the process, method, article or device including the element, unless further limitations are presented.

It shall be appreciated by a person having ordinary skills in the art that although some embodiments described herein include some features included in other embodiments instead of others, the combination of features of different embodiments means that they are within the scope of this embodiment and form different embodiments.

It can be understood that the above embodiments are only some embodiments illustrative of the principle of the present disclosure, but are not limiting the present disclosure. For a person having ordinary skills in the art, various modifications and improvements can be made without departing from the scope and concept of the present disclosure, while these modifications and improvements are also regarded as falling within the protection scope of the present disclosure.

## Claims

1. A multi-service forwarding method for forwarding messages of different types, comprising,
translating, by means of a message translation table, a format of a received message into a format of a message to be forwarded corresponding to a forwarding port.

2. The method according to claim 1, wherein the message translation table comprises,
an incoming translation table, which is configured to translate a double-tagged message into a single-tagged VLAN message; and
an outgoing translation table, which is configured to translate a single-tagged VLAN message into a double-tagged message.

3. The method according to claim 2, wherein the incoming translation table translates the double-tagged message into a single-tagged VLAN message by replacing or removing.

4. The method according to claim 2, wherein the outgoing translation table translates the single-tagged VLAN message into a double-tagged message by embedding an inner tag or adding an outer tag.

5. The method according to claim 2, wherein the double-tagged message is a QinQ message.

6. The method according to any one of claims 1 to 5, prior to translating, by means of a message translation table, a format of a received message into a format of a message to be forwarded corresponding to a forwarding port, further comprising,
configuring the message translation table according to a message receiving port and a message forwarding port.

7. The method according to claim 6, prior to configuring the message translation table according to a message receiving port and a message forwarding port, further comprising,
creating the message forwarding port.

8. The method according to claim 7, wherein the message forwarding port comprises one of a Layer 3 port, a multi-protocol switching label port, or an extensible virtual local area network port.

9. An electronic apparatus, comprising,
at least one processor; and
a storage device storing at least one program thereon, which when executed by the processor, causes the processor to carry out the method according to any one of claims 1 to 8.

10. A computer-readable medium storing a computer program thereon, which when executed by a processor, causes the processor to carry out the method according to any one of claims 1 to 8.
